# EUROPÄISCHE PATENTSCHRIFT

(11) **EP 2 697 508 B1**
(45) Veröffentlichungstag und Bekanntmachung des Hinweises auf die Patenterteilung: **15.04.2015**
(21) Anmeldenummer: 12717087.6
(22) Anmeldetag: 16.04.2012
(51) Int. Cl.: F03D 7/02, F03D 11/00

(54) **VORRICHTUNG UND VERFAHREN ZUM BESTIMMEN EINER BLATTPOSITION UND ZUM BEENDEN EINER SICHERHEITSFAHRT**
DEVICE AND METHOD FOR DETERMINING A BLADE POSITION AND FOR ENDING A SAFETY RUN
DISPOSITIF ET PROCÉDÉ PERMETTANT DE DÉTERMINER UNE POSITION DE PALE ET D'ASSURER UNE SÉCURITÉ DE MARCHE

(30) Priorität: 14.04.2011 DE 102011007440
(43) Veröffentlichungstag der Anmeldung: 19.02.2014
(73) Patentinhaber: Suzlon Energy GmbH, 18057 Rostock (DE)
(72) Erfinder: IBENDORF, Ingo, 18057 Rostock (DE); VILBRANDT, Reinhard, 18059 Rostock (DE)
(86) Internationale Anmeldenummer: PCT/EP2012/056935
(87) Internationale Veröffentlichungsnummer: WO 2012/140267

(56) Entgegenhaltungen:
- WO-A1-2005/017350
- WO-A1-2010/086688
- DE-A1-102005 034 899

## Beschreibung

Die Erfindung betrifft eine Verstelleinrichtung für ein Rotorblatt eines Rotors einer Windturbine. Der Rotor umfasst eine Nabe, ein Rotorblatt, ein zwischen Rotorblatt und Nabe montierbares Lager und die Verstelleinrichtung. Das Lager umfasst einen Innenring und einen Außenring die verdrehbar zu einander angeordnet sind. Das Rotorblatt ist somit im Wesentlichen in um seine Längsachse drehbar an der Nabe angeordnet. Durch die Verstelleinrichtung ist das Rotorblatt in verschiedenen Anstellpositionen einstellbar. Die Verstelleinrichtung umfasst mindestens einen elektrischen Verstellmotor der über ein Antriebsritzel ein mit dem Rotorblatt verbundenes Zahnrad antreibt, ein Umrichter der mit einem elektrischen Netz gekoppelt ist und den Verstellmotor ansteuert, und eine Steuereinheit zum Regeln der Verstellmotors. Darüber hinaus betrifft die Erfindung ein Verfahren zum Verstellen eines Rotorblatts einer Windturbine.

Ein Vorteil bei Windturbinen mit verstellbaren Rotorblättern ist, dass die Leistungsaufnahme bzw. das Antriebsmoment des Rotors durch Veränderung der Blatteinstellwinkel beeinflusst werden kann. Bei einer Betriebsstörung kann somit, über eine Verstelleinrichtung, eine Sicherheitsfahrt der Rotorblätter angesteuert werden, wobei sich die Rotorblätter in die sogenannte Fahnenstellung drehen. Die Fahnenstellung wird dann erreicht, wenn sich das Rotorblatt aus dem Wind heraus gedreht hat, so dass, nur eine minimale Angriffsfläche des Rotorblatts dem Wind ausgesetzt ist. Somit kann die notwendige Energie zum Aufrechterhalten der Drehbewegung des Rotors nicht mehr aufgenommen werden, wodurch die Windturbine angehalten oder zumindest abgebremst wird.

Zum Überwachen der Verstelleinrichtung und des Blattverstellvorgangs umfassen bekannte Windturbinen eine Vielzahl von Gebern, zum Beispiel überwacht ein Geber die Position des Verstellmotors und ein anderer die Position des blattseitigen Zahnkranzes. Hinzu kommen noch Endlagenschalter die den Blattverstellbereich abgrenzen. Solche Endlagenschalter sind meistens wegen ihrer hohen Präzision als Getriebebox ausgebildet, in denen ein Getriebe und ein Schalter in einem gemeinsamen Gehäuse untergebracht sind. Die Drehung des Rotorblatts wird z.B. über ein Ritzel, das mit dem Rotorblattseitigen Zahnkranz im Eingriff steht, in dem Getriebe eingeleitet. Nach einer vorbestimmten Umdrehung wird der Schalter von einer mit dem Getriebe verbundenen Nockenscheibe betätigt. Nachteilig bei der Getriebebox ist aber der hohe Preis.

Eine Windturbine mit einer solchen Verstelleinrichtung ist weitläufig aus dem Stand der Technik bekannt. Die EP 2 058 513 A2 offenbart zum Beispiel eine Windturbine mit einer Verstelleinrichtung zum Variieren der Anstellwinkel der Rotorblätter. Die Verstelleinrichtung weist dabei einen elektrischen Verstellmotor auf, der über einen Umrichter mit einem elektrischen Netz gekoppelt ist. Der elektrische Verstellmotor überträgt sein Antriebsmoment über ein Antriebsritzel an einem mit dem Rotorblatt verbundenen Zahnrad. Die Verstelleinrichtung umfasst auch eine Steuereinheit zum Regeln eines Blattverstellvorgangs und zwei Endschalter zum Überwachen des Blattverstellvorgangs, wobei der erste Endlagenschalter eine Drehung des Rotorblatts über die Fahnenstellung hinaus detektieren soll. Wird der erste Endlagenschalter ausgelöst, wird das Rotorblatt mechanisch über eine Bremse der Verstelleinrichtung abgebremst. Der zweite Endschalter wird dann ausgelöst wenn der Verstellvorgang trotz Abbremsen nicht vor dem zweiten Endschalter zum Stehen kommt, und meldet beim Auslösen einen Fehler im Bremssystem an einer Betriebsführung. Die Betriebsführung beantragt danach ein Service der Windturbine. Ein Nachteil der bekannten Windturbine ist, dass z.B. bei einem Ausfall des ersten Endschalters keine Notabschaltung erfolgt.

Es ist daher eine Aufgabe der Erfindung, eine verbesserte Verstelleinrichtung anzugeben, welche unter anderem die Nachteile des Stands der Technik vermeidet. Insbesondere soll dabei eine Verstelleinrichtung für ein Rotorblatt einer Windturbine angegeben werden, die eine Vorrichtung zum Bestimmen eines Anstellwinkels und zum Beenden einer Sicherheitsfahrt des Rotorblatts aufweist.

Die Aufgabe wird erfindungsgemäß mit den Merkmalen des Hauptanspruchs 1 gelöst, indem die Verstelleinrichtung einen Verstellmotor, einen Umrichter, eine Steuereinheit und eine Vorrichtung zum Bestimmen einer Blattposition aufweist. Die Vorrichtung zum Bestimmen der Blattposition umfasst dabei Mittel zum Erzeugen eines von der Anstellposition des Rotorblatts abhängigen Signals und eine Auswerteeinheit zum Vergleichen des Signals oder ein Derivat des Signals. Das von der Anstellposition abhängige Signal kann z.B. eine Geschwindigkeit, eine Beschleunigung oder eine absolute Position sein. Die Mittel zum Erzeugen des von der Anstellposition des Rotorblatts abhängigen Signals können unter anderem als Absolutgeber, die abhängig von dem Blattverstellbereich entweder ein Singleturn-Drehgeber oder ein Multiturn-Drehgeber sind, als Resolver, als Potentiometergeber oder als Inkrementalgeber ausgebildet sein. Vorteilhafterweise werden hierfür einen der schon vorhandenen Geber zum Überwachen der Verstelleinrichtung benutzt. Bevorzugt werden auch mehrere der vorhandenen Geber als Mittel benutzt, somit kann eine Plausibilitätskontrolle der abgegebenen Signale von einer Steuereinheit durchgeführt werden. Bei Ausfall eines Gebers kann die Steuereinheit auf das Signal von dem anderen Geber umschalten, womit die Funktion der Verstelleinrichtung gewahrt ist.

In einer weiteren Ausführungsform kann die Erzeugung des von der Anstellposition des Rotorblatts abhängigen Signals direkt in den Umrichter geschehen. Das von der Anstellposition des Rotorblatts abhängige Signal ist in diesem Fall der Strom- und/oder Spannungsverlauf. Beispielsweise mittels einer Vektorfeldanalyse kann aus dem Strom- und/oder Spannungsverlauf die Umdrehung und somit die Position des Verstellmotors in der Auswerteeinheit berechnet werden

Die Auswerteeinheit verfügt über mindestens einen Signaleingang zum Empfangen eines von der Anstellposition abhängigen Signals. Das Signal kann entweder direkt von dem Mittel oder indirekt über die Steuereinheit des Umrichters kommen. In der Auswerteeinheit wird das Signal, sofern nicht schon als absolute Winkelposition von dem Mittel ausgegeben, analysiert und bearbeitet. Die Signalbearbeitung kann zum Beispiel darin bestehen, dass das Signal von einem Inkrementalgeber mit einem Referenzwert von einem weiteren Geber verglichen wird und somit die absolute Position des Rotors bestimmt wird. Die Auswerteeinheit ist normalerweise in der Steuereinheit integriert, aus Nachrüstzwecken kann sie aber auch als eigenständiges Modul ausgebildet sein, das über einen Signaleingang und einen Signalausgang mit der Steuereinheit verbunden ist. In der Auswerteeinheit wird auch die Vektoranalyse des an den Verstellmotor zugeführten Stroms durchgeführt.

Das Signal von dem Mittel oder das von der Auswerteeinheit bearbeitete Derivat des Signals wird danach mit, in einem Speicher der Steuereinheit hinterlegten, Schwellwerten verglichen. Bei Erreichen eines ersten Schwellwerts schickt die Auswerteeinheit ein Signal an die Steuereinheit zum Beenden des Blattverstellvorgangs. Die Steuereinheit schaltet danach den Steuerstrom und/oder Steuerspannung von dem Umrichter zum Verstellmotor aus und der Verstellvorgang wird beendet.

Insbesondere zeichnet sich die Erfindung dadurch aus, dass die erfindungsgemäße erste Vorrichtung zum Bestimmen einer Blattposition keine mechanischen Endlageschaltern bei denen ein Schalter von einer Betätigungsvorrichtung betätigt wird, beispielsweise Getriebeboxen oder Mikroschalter, umfasst. Dies betrifft nur die erste Vorrichtung und natürlich nicht die nachfolgend beschriebene Notausschaltvorrichtung.

Um sicherzustellen, dass sich das Rotorblatt bei einer Sicherheitsfahrt nicht zu weit drehen kann, zum Beispiel bei einem Defekt in der ersten Vorrichtung zum Bestimmen der Blattposition, umfasst die Verstelleinrichtung in einem weiteren Ausführungsbeispiel eine Notausschaltvorrichtung zum überwachen einer Anstellposition des Rotorblatts.

Die Notausschaltvorrichtung umfasst, wie die erste Vorrichtung, Mittel zum Erzeugen eines von der Anstellposition des Rotorblatts abhängigen Signals und eine Auswerteeinheit zum Vergleichen des Signals oder ein Derivat des Signals. Die Mittel und die Auswerteeinheit der zweiten Vorrichtung können dieselben sein wie die der ersten Vorrichtung, die Notausschaltvorrichtung kann aber auch entweder separate Mittel oder eine separate Auswerteeinheit aufweisen. Um eine notwendige Redundanz zu erreichen, verfügt die Notausschaltvorrichtung vorteilhafterweise über separate Mittel zum Erzeugen eines von der Anstellposition abhängiges Signal und eine separate Auswerteeinheit. Die Mittel zum Erzeugen des Signals können dabei von demselben Typ sein wie die Mittel der ersten Vorrichtung. Das Signal von den Mitteln wird in der zweiten Auswerteeinheit, sofern nicht schon als absolute Winkelposition von dem Mittel ausgegeben, analysiert und bearbeitet. Danach wird das von den Mitteln erzeugte Signal oder das von der Auswerteeinheit bearbeitete Derivat des Signals mit den in dem Speicher der Steuereinheit hinterlegten Schwellwerten verglichen. Bei erreichen eines zweiten Schwellwerts trennt die Steuereinheit die Verstelleinrichtung von der Strom- und/oder Spannungsversorgung.

In einem weiteren Ausführungsbeispiel kann die Notausschaltvorrichtung zum Bestimmen einer Blattposition, im Gegensatz zu der ersten Vorrichtung, als mechanischer Endlagenschalter ausgebildet sein. Der mechanische Schalter kann dabei an der Nabe des Rotors angeordnet sein und von einem auf dem Rotorblatt angeordneten Betätigungsmittel, bei erreichen der gewünschten Abschaltposition, betätigt werden. Bei Betätigung des Schalters wird ein Schaltsignal an die Steuereinheit geschickt und die Steuereinheit trennt die Verstelleinrichtung von der Strom- und/oder Spannungsversorgung. Um die Windturbine, nach einer Trennung der Verstelleinrichtung von der Spannungsversorgung, wieder in Betrieb nehmen zu können, muss die Verstelleinrichtung von einem Servicetechniker überprüft und zurückgesetzt werden. Somit wird verhindert, dass die Windturbine mit einem Systemfehler weiter betrieben wird.

Der erste für die Beendigung der Sicherheitsfahrt zuständige Schwellwert, kann in einem Bereich zwischen 85° und 95° liegen. Vorteilhafterweise liegt der Schwellwert bei 90°, was die Fahnenstellung des Rotorblatts entspricht. Der zweite, für die Spannungsabschaltung zuständige Schwellwert, kann in einem anschließenden Bereich zwischen 95° und 100° liegen. Vorteilhafterweise liegt der zweite Schwellwert bei 95°. In einer weiteren Ausführungsform kann der Blattverstellbereich stattdessen in der Betriebsrichtung abgegrenzt werden. Durch hinterlegen eines Schwellwerts in einem Bereich zwischen 0° und -10°, kann das maximale Rotordrehmoment reduziert werden. Bei erreichen des Schwellwerts kann zum Beispiel eine Sicherheitsfahrt des Rotorblatts eingeleitet werden, wobei sich das Rotorblatt aus dem hoch belasteten Bereich in Richtung Fahnenstellung bewegt. Vorteilhafterweise liegt der Schwellwert in Betriebsrichtung bei -5°. Es können auch mehrere Schwellwerte hinterlegt werden so dass sich eine obere und eine untere Grenze des Blattverstellbereiches einstellen lässt.

Mit der erfindungsgemäßen Vorrichtung zum Bestimmen einer Anstellposition des Rotorblatts ergibt sich auch der Vorteil, dass sich weitere Funktionen einfach implementieren lassen. Die hinterlegten Schwellwerte können unter anderem zu Testzwecken, bei Inbetriebnahme oder bei Service der Windturbine schnell verändert werden, zum Beispiel könnten die Schwellwerte zum Beenden des Blattverstellvorgangs oder zum Trennen der Spannungsversorgung umgangen werden, so dass sich größere Blattwinkel einstellen lassen und der Rotor auch rückwärts betrieben werden kann.

Der Verstellmotor wird über den Umrichter an das elektrische Netz gekoppelt und kann entweder als Gleichstrommotor oder als Wechselstrommotor ausgelegt sein. Über die Steuereinheit des Umrichters kann der von dem Umrichter an den Verstellmotor gespeiste Steuerstrom variiert werden und somit die Geschwindigkeit des Verstellmotors angepasst werden. In einer Ausführungsform ist der Verstellmotor an der Nabe angeordnet und treibt über einem auf einer Ausgangswelle des Verstellmotors angeordnetes Antriebsritzel einem mit dem Rotorblatt verbundenen Innenzahnkranz des Lagers an. In einer weiteren Ausführungsform ist der Verstellmotor an dem Rotorblatt angeordnet und treibt über das Antriebsritzel einen mit der Nabe verbundenen Zahnkranz an.

Eine Sicherheitsfahrt der Rotorblätter kann z.B. dadurch eingeleitet werden, dass ein Geber in der Windturbine eine Betriebsstörung an die Steuereinheit der Verstelleinrichtung meldet. Die Steuereinheit leitet danach einen Blattverstellvorgang in Richtung Fahnenstellung über den Umrichter ein. Während des Blattverstellvorgangs erzeugen die Mittel ein von der Anstellposition des Rotorblatts abhängiges Signal, das an der Auswerteeinheit weitergeleitet wird. In der Auswerteeinheit wird das Signal bearbeitet und mit einem hinterlegten Schwellwert verglichen. Bei erreichen eines ersten Schwellwerts wird ein Signal an die Steuereinheit des Umrichters übertragen und die Steuereinheit beendet den Blattverstellvorgang.

In einer weiteren Ausführungsform wird während des Blattverstellvorgangs ein weiteres von der Anstellposition des Rotorblatts abhängiges Signal von einem separaten Mittel erzeugt. Dieses Signal wird an einer separaten Auswerteeinheit weitergeleitet, wo das Signal bearbeitet und mit einem hinterlegten Schwellwert verglichen wird. Bei einem überfahren des ersten Schwellwerts ohne Beendigung des Blattverstellvorgangs, wird bei erreichen eines zweiten Schwellwerts ein Signal an die Steuereinheit geschickt und die Steuereinheit trennt die Verstelleinrichtung von der Spannungsversorgung.

Weitere Einzelheiten der Erfindung gehen aus den Zeichnungen anhand der Beschreibung hervor.

Die Figuren zeigen
- Fig. 1: eine Windturbine,
- Fig. 2: eine Nabe mit einer aus dem Stand der Technik bekannten Verstelleinrichtung und die erfindungsgemäße Vorrichtung zum Bestimmen einer Anstellposition des Rotorblatts,
- Fig. 3: eine Verstelleinrichtung mit einer ersten Vorrichtung zum Bestimmen einer Anstellposition des Rotorblatts,
- Fig. 4: eine Verstelleinrichtung mit einer ersten und einer zweiten Vorrichtung zum Bestimmen einer Anstellposition des Rotorblatts,
- Fig. 5: eine Verstelleinrichtung mit einer ersten und einer zweiten Vorrichtung zum Bestimmen einer Anstellposition des Rotorblatts,
- Fig. 6: Verarbeitungsschritte in der Auswerteeinheit.

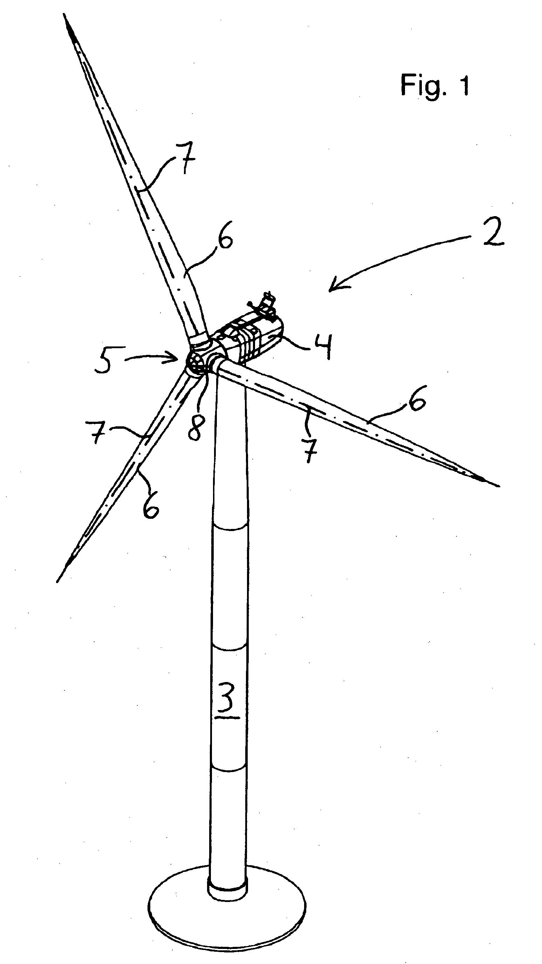

In Figur 1 ist eine Windturbine 2 mit einem Turm 3, einem auf den Turm 3 drehbar gelagerten Maschinenhaus 4 und einen über eine Rotorwelle mit einem in dem Maschinenhaus 4 angeordneten Generator verbundenen Rotor 5 dargestellt. Der Rotor 5 umfasst eine Nabe 8, drei jeweils um eine Blattachse 7 drehbar gelagerten Rotorblätter 6 und ein zwischen Nabe 8 und Rotorblatt 6 montiertes Lager 9. Das Lager besteht aus einem mit der Nabe 8 verbundenen Außenring, und einem zu dem Außenring 29 verdrehbaren und mit dem Rotorblatt 6 verbundenen Innenring 23. Jedes Rotorblatt 6 umfasst auch eine Verstelleinrichtung 1 zum Verstellen der Anstellposition des Rotorblatts 6. Die Verstelleinrichtung 1 umfasst dazu einen Verstellmotor 10, einem auf einer Ausgangswelle 21 des Verstellmotors 10 angeordnetes Antriebsritzel 22, einen mit dem Antriebsritzel 22 im Eingriff stehenden Zahnkranz 23, einen Umrichter 13 zum Speisen eines Stroms und/oder einer Spannung an den Verstellmotor 10 und eine Steuereinheit 14 zum Steuern und/oder Regeln des Umrichters 13.

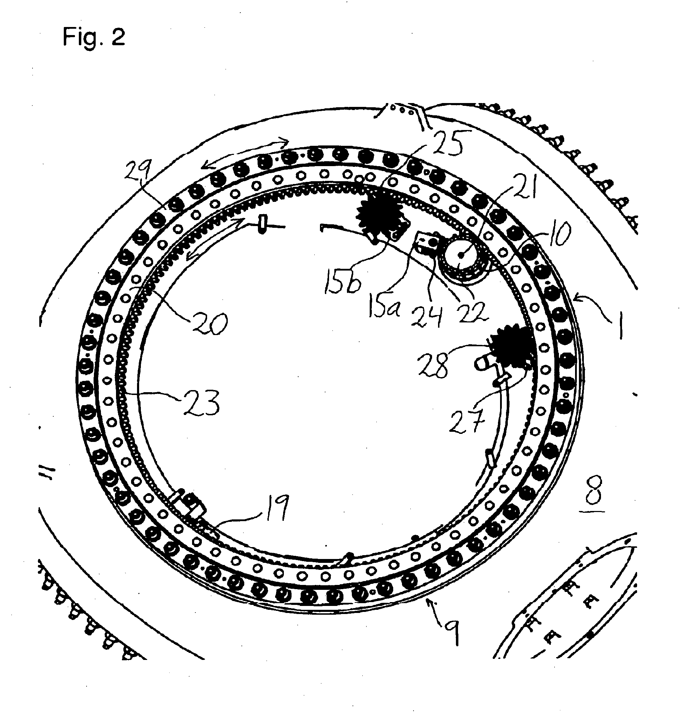

Figur 2 zeigt die Nabe 8 mit einer aus dem Stand der Technik bekannten Verstelleinrichtung 1 und die Erfindungsgemäße erste Vorrichtung zum Bestimmen einer Anstellposition des Rotorblattes 6. Bei einem Verstellvorgang treibt der aus dem Stand der Technik bekannte und an der Nabe 8 angeordnete Verstellmotor 10 über ein Antriebsritzel 22 einen mit dem Rotorblatt 6 verbundenen Innenzahnkranz 23 des Lagers 9 an, wobei sich der mit dem Rotorblatt 6 verbundene Innenring 20 des Lagers 9 und der mit der Nabe 8 verbundene Außenring 29 des Lagers 9 zueinander verdrehen. Der Verstellmotor 10 ist über einen Umrichter 13 an das elektrische Netz angeschlossen. Im Stand der Technik wird die Drehung des Rotorblatts über ein Mittel 15a zum Erzeugen eines von der Anstellposition des Rotorblatts 6 abhängiges Signal und einen als Getriebebox ausgebildeten Endlagenschalter 27 überwacht. Das erste Mittel 15a ist als Resolver ausgebildet der über ein Zahnrad 24 mit dem Antriebsritzel 22 des Verstellmotors 10 im Eingriff steht und somit die Drehung des Verstellmotors 10 überwacht. Bei der Getriebebox werden ein Getriebe und ein Schalter in einem gemeinsamen Gehäuse untergebracht. Die Drehung des Rotorblatts 6 wird über ein Ritzel 28, das mit dem blattseitigen Zahnkranz 23 im Eingriff steht, in dem Getriebe eingeleitet. Nach einer vorbestimmten Umdrehung wird der Schalter von einer mit dem Getriebe verbundenen Nockenscheibe betätigt.

Bei der Erfindungsgemäßen Verstelleinrichtung 1 wird zusätzlich zu dem ersten Mittel 15a ein zweites Mittel 15b zum Erzeugen eines von der Blattposition abhängiges Signal hinzugefügt. Das zweite Mittel 15b das auch als Resolver ausgebildet sein kann, steht über ein Zahnrad 25 mit dem Innenzahnkranz 23 des Lagers 9 im Eingriff und überwacht die Drehung des Rotorblatts 6. Die beiden Mittel 15a, 15b können mit einer Steuereinheit 14 des Umrichters 13 verbunden sein und deren Signale zur Positionierung des Rotorblatts 6 benutzt werden. Das Signal des blattseitigen Mittels 15b kann dann benutzt werden wenn eine genaue Positionierung des Rotorblatts 6 erwünscht ist. Das Signal von dem motorseitigen Mittel 15a kann verwendet werden wenn eine genaue Steuerung des Verstellmotors 10 gewünscht ist. Die Steuereinheit 14 kann auch einen Vergleich der beiden Signale durchführen um somit die Plausibilität der Signale zu prüfen. Bei einem Ausfall eines der Mittel 15a, 15b kann die Steuereinheit 14 auf dem zweiten funktionierenden Mittel 15a, 15b umschalten, um somit die Funktion der Verstelleinrichtung aufrecht zu erhalten. Die Signale der Mittel 15a, 15b werden in der Steuereinheit 14 mit abgelegten Schwellwerten verglichen, bei Erreichen der Schwellwerte kann zum Beispiel die Geschwindigkeit des Verstellvorgangs geändert oder der Verstellvorgang beendet werden. Durch die Redundanz der beiden Schalter 15a, 15b kann die Überwachung und Beendung des Verstellvorgangs komplett in der Steuereinheit des Umrichters geschehen, sodass auf den als Getriebebox ausgebildeten Endlagenschalter 27 verzichtet werden kann. Durch den Verzicht auf die Getriebebox lassen sich sowohl Bauraum wie auch Kosten für die teure Getriebebox einsparen.

Zur Notausschaltung der Verstelleinrichtung 1 bei Ausfall der Steuereinheit 14 oder der Mittel 15a und 15b, kann die Verstelleinrichtung mit einer Notausschaltvorrichtung versehen werden. Die Notausschaltvorrichtung besteht in dieser Ausführung aus einem als Mikroschalter ausgebildeten Endlagenschalter 19, wobei der Mikroschalter bei erreichen einer bestimmten Abschaltposition von einem mit dem Rotorblatt 6 verbundenen Betätigungselement betätigt wird. Bei Betätigung des Mikroschalters wird die Strom- und Spannungsversorgung der Verstelleinrichtung unterbrochen, sodass sich das Rotorblatt nicht weiter drehen kann. Der Mikroschalter hat den Vorteil, dass er eine geringe Baugröße aufweist und kostengünstig ist.

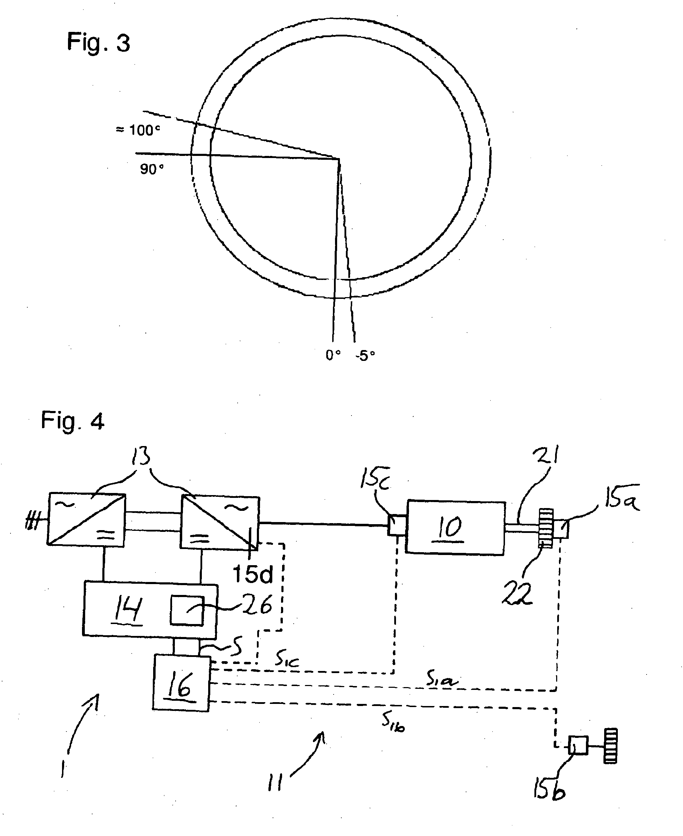

Figur 3 zeigt einen zugelassenen Verstellbereich des Rotorblatts 6. Der Bereich zwischen -5° und 90° entspricht dem im normalen Betrieb angefahrenen Verstellbereich. Die Anstellposition 0° entspricht dabei ein voll im Wind stehendes Rotorblatt 6 und 90° entspricht ein in der Fahnenstellung stehendes Rotorblatt 6. Der erste Schwellwert λ₁ zum Beenden der Sicherheitsfahrt des Rotorblatts 6 liegt daher bei 90°. Der Bereich zwischen 100° und -5° gilt als verbotener Bereich und darf nicht von dem Rotorblatt angefahren werden. Um zu Verhindern, dass das Rotorblatt in den verbotenen Bereich kommt wird ein zweiter und ein dritter Schwellwert λ₂, λ₃ hinterlegt. Bei überfahren des ersten Schwellwerts λ₁ ohne Beendigung der Sicherheitsfahrt, wird bei Erreichen des zweiten Schwellwertes λ₂ bei 100° die Verstellvorrichtung von der Spannungsversorgung getrennt. In Betriebsrichtung wird der zugelassene Blattverstellbereich durch den dritten Schwellwert λ₃ bei -5° abgegrenzt. Bei Erreichen des Schwellwerts λ₃ wird eine Sicherheitsfahrt des Rotorblatts 6 eingeleitet und das Rotorblatt 6 bewegt sich in Richtung Fahnenstellung.

In Figur 4 wird eine erfindungsgemäße Verstelleinrichtung 1 abgebildet. Die Verstelleinrichtung 1 umfasst einen Umrichter 13, einen Verstellmotor 10 eine Steuereinheit 14 und einer Vorrichtung 11 zum Bestimmen einer Blattposition. Die Vorrichtung 11 zum Bestimmen einer Blattposition umfasst mindestens ein Mittel 15a, 15b oder 15c zum Erzeugen eines von der Anstellposition des Rotorblatts abhängigen Signals und eine Auswerteeinheit 16. Der Verstellmotor 10 ist über den Umrichter 13 an das elektrische Netz gekoppelt und treibt über das Antriebsritzel 22 den mit dem Rotorblatt 6 verbundenen Innenzahnkranz 23 des Lagers 9 an. Die mit der Steuereinheit 14 verbundene Auswerteeinheit 16 ist mit einem Signalausgang des mindestens einen Mittel 15a, 15b oder 15c verbunden. Die Mittel 15a, 15b und 15c sind in diesem Beispiel als Resolver ausgebildet, wobei die Mittel 15a von dem Antriebsritzel 22 auf der langsamen Welle 21 des Verstellmotors 10 angetrieben werden, die Mittel 15b von dem mit dem Rotorblatt 6 verbundenen Innenzahnkranz 23 des Lagers 9 angetrieben werden und die Mittel 15c von der schnellen Welle des Verstellmotors angetrieben werden. Die Mittel 15d sind in dem Umrichter integriert und übertragen den von dem Umrichter 13 an den Verstellmotor gespeisten Strom- und/oder Spannungsverlauf als Signal an die Auswerteeinheit 16. In der Auswerteeinheit 16 wird das Signal S₁, sofern nicht schon als absolute Winkelposition von dem Mittel 15a, 15b oder 15c ausgegeben, bearbeitet. Die Signale S₁ₐ, S_{1b}, S_{1c} von den Mitteln 15a, 15b und 15c oder das Derivat der Signale S₁ₐ, S_{1b}, S_{1c} wird danach in der Auswerteeinheit 16 mit in einem Speicher 26 der Steuereinheit 14 hinterlegten Schwellwerten λ verglichen. Bei erreichen eines ersten Schwellwerts λ₁ gibt die Auswerteeinheit 16 ein Signal an die Steuereinheit 14, wobei die Steuereinheit 14 die Strom- und/oder Spannungsspeisung von dem Umrichter 13 an den Verstellmotor 10 unterbricht und somit den Blattverstellvorgang beendet.

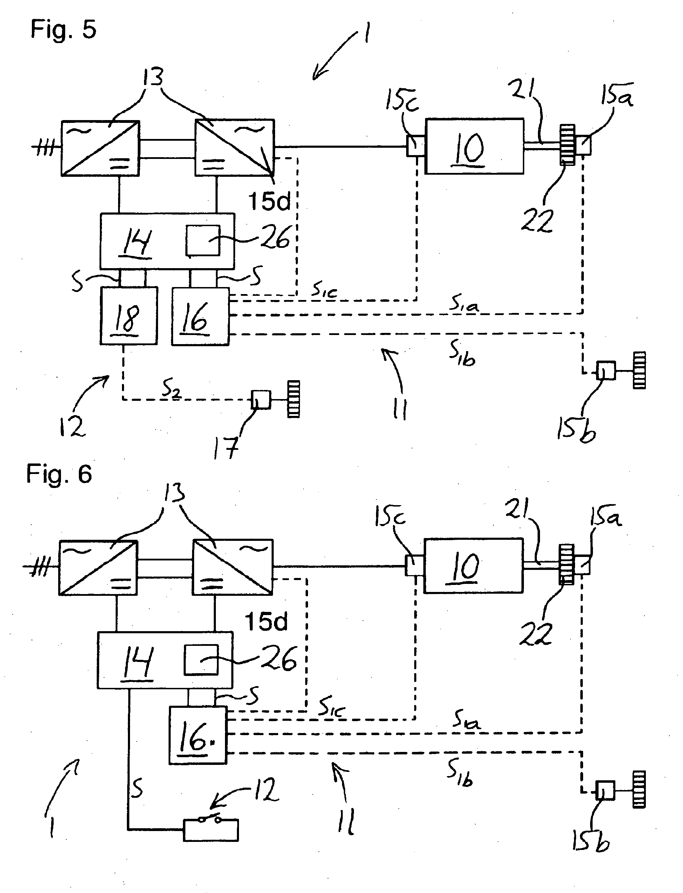

In Figur 5 wird eine weitere Ausführungsform der erfindungsgemäßen Verstelleinrichtung 1 abgebildet. In dieser Ausführungsform wird die erste Vorrichtung 11 zum Bestimmen einer Blattposition mit Notausschaltvorrichtung 12 zum Bestimmen einer Blattposition ergänzt. Die Notausschaltvorrichtung 12 umfasst Mittel 17 zum Erzeugen eines von der Blattposition abhängiges Signal S₂ und eine Auswerteeinheit 18 zum Bearbeiten und Vergleichen des Signals S₂ oder ein Derivat des Signals S₂ mit hinterlegten Schwellwerten λ. Die Mittel 17 und die Auswerteeinheit 18 der Notausschaltvorrichtung 12 sind dabei nicht dieselben wie die der ersten Vorrichtung 11. Die Schwellwerte können in demselben Speicher 26 wie die Schwellwerte der ersten Vorrichtung 11 oder in einem separaten Speicher hinterlegt sein. Die zweiten Mittel 17 sind in diesem Beispiel als Resolver, Absolutgeber, Potentiometergeber oder als Inkrementalgeber ausgebildet, und können von dem Antriebsritzel 22 des Verstellmotors 10, von dem Innenzahnkranz 23 oder von der schnellen Welle des Verstellmotors 10 angetrieben werden. Das Mittel 17 könnte aber auch in den Umrichter 10 integriert sein und das Signal S₂ als Strom- und/oder Spannungsverlauf an die Auswerteeinheit 18 übertragen. Die zweite Auswerteeinheit 18 vergleicht parallel zu der ersten Auswerteeinheit 16 die Position des Rotorblatts 6. Bei überfahren des ersten Schwellwertes λ₁ ohne eine Beendigung des Blattverstellvorgangs durch die erste Auswerteeinheit 16, wird bei erreichen eines zweiten Schwellwerts λ₂ ein Signal S_{St} von der zweiten Auswerteeinheit 18 an die Steuereinheit 14 geschickt und die Steuereinheit 14 trennt die Verstelleinrichtung 1 komplett von der Spannungsversorgung.

Figur 6 zeigt eine weitere Ausführungsform der erfindungsgemäßen Verstelleinrichtung 1. Die Notausschaltvorrichtung 12 zum Bestimmen einer Blattposition ist in diesem Beispiel als Mikroschalter 19 ausgebildet. Der Mikroschalter 19 ist an der Nabe 8 derart angeordnet, so dass ein an dem Rotorblatt 6 angeordnetes Betätigungselement bei erreichen einer vorbestimmten Blattposition den Mikroschalter 19 betätigt. Der Mikroschalter 19 könnte aber auch an dem Rotorblatt 6 angeordnet sein und von einem an der Nabe angeordnetes Betätigungselement betätigt werden. Der Mikroschalter 19 ist direkt mit der Steuereinheit 14 verbunden und überträgt bei Betätigung ein Signal S zum Trennen der Verstelleinrichtung 1 von der Spannungsversorgung an die Steuereinheit 14.

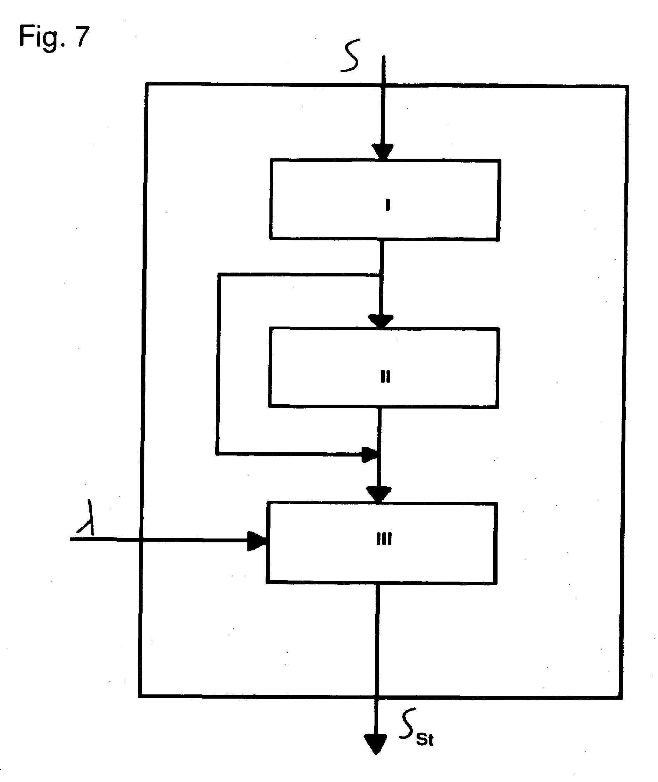

In Figur 7 werden die Verarbeitungsschritte in der Auswerteeinheit 16, 18 abgebildet. In Schritt I empfängt und analysiert die Auswerteeinheit 16, 18 ein Signal von einem oder mehreren der Mittel 15a, 15b, 15c, 15d, 17 zum Erzeugen eines von der Blattposition abhängiges Signal S. Wenn das Signal als absolute Winkelposition geliefert wird, erfolgt nach Schritt I direkt Schritt III, ansonsten wird das Signal in Schritt II bearbeitet. Die Bearbeitung kann z.B. darin bestehen, dass eine von einem der Mittel 15a, 15b, 17 abgegebene Winkeländerung mit einem Referenzwert von einem weiteren Geber verglichen wird und somit die absolute Position des Rotorblatts 6 bestimmt wird oder, dass eine Position aus dem sinusförmigen Stromsignal von dem Verstellmotor 10 berechnet wird. In Schritt III wird das von den Mitteln abgegebene Signal S₁, S₂ oder das von der Auswerteeinheit 16, 18 bearbeitete Derivat des Signals S₁, S₂ mit hinterlegten Schwellwerten λ verglichen. Bei erreichen eines Schwellwerts λ schickt die Auswerteeinheit 16, 18 ein Signal S_{St} an der Steuereinheit 14. Abhängig von dem erreichten Schwellwert λ wird dann entweder der Blattverstellvorgang beendet oder die Strom- und/oder Spannungsversorgung der Verstelleinrichtung 1 unterbrochen.

Die in den beschriebenen Ausführungsbeispielen offenbarten Merkmalskombinationen sollen nicht limitierend auf die Erfindung wirken, vielmehr sind auch die Merkmale der unterschiedlichen Ausführungen miteinander kombinierbar.

**Bezugszeichenliste**

| | | | |
|---|---|---|---|
| 1 | Verstelleinrichtung | 20 | Innenring |
| 2 | Windturbine | 21 | Langsame Ausgangswelle des Verstellmotors |
| 3 | Turm | | |
| 4 | Maschinenhaus | 22 | Antriebsritzel |
| 5 | Rotor | 23 | Innenzahnkranz |
| 6 | Rotorblatt | 24 | Zahnrad |
| 7 | Blattachse | 25 | Zahnrad |
| 8 | Nabe | 26 | Speicher |
| 9 | Lager | 27 | Getriebebox |
| 10 | Verstellmotor | 28 | Ritzel |
| 11 | Vorrichtung zum Bestimmen einer Blattposition | 29 | Außenring |
| | | S | Signal |
| 12 | Notausschaltvorrichtung | S₁ₐ | Von der Blattposition abhängiges Signal |
| 13 | Umrichter | | |
| 14 | Steuereinheit | S_{1b} | Von der Blattposition abhängiges |
| 15 | Geber | | Signal |
| 15a | Mittel zum Erzeugen eines von der Anstellposition abhängiges Signal | S_{1c} | Von der Blattposition abhängiges Signal |
| 15b | Mittel zum Erzeugen eines von der Anstellposition abhängiges Signal | S₂ | Von der Blattposition abhängiges Signal |
| 15c | Mittel zum Erzeugen eines von der Anstellposition abhängiges Signal | S_{St} | An Steuereinheit gesendetes Signal |
| | | Λ | Schwellwerte |
| 16 | Auswerteeinheit | λ₁ | Erster Schwellwert |
| 17 | Mittel zum Erzeugen eines von der Anstellposition abhängiges Signal | λ₂ | Zweiter Schwellwert |
| | | λ₃ | Dritter Schwellwert |
| 18 | Auswerteeinheit | | |
| 19 | Endlagenschalter | | |

## Patentansprüche

1. Verstelleinrichtung (1) für ein Rotorblatt (6) eines Rotors (5) einer Windturbine (2),
- wobei der Rotor (5) eine Nabe (8) und mindestens ein Rotorblatt (6) umfasst,
- das Rotorblatt (6) an ein zwischen Rotorblatt (6) und Nabe (8) montierbares Lager (9) montierbar ist,
- und das Rotorblatt (6) um eine in axialer Richtung des Rotorblatts (6) verlaufende Blattachse (7) drehbar in unterschiedlichen Anstellpositionen an der Nabe anordenbar ist,
- wobei die Verstelleinrichtung (1) einen Verstellmotor (10) zum Antreiben und/oder Festsetzen des Rotorblatts (6), eine erste Vorrichtung (11) zur Bestimmung einer Blattposition und einen Umrichter (13) zum Ansteuern des Verstellmotors (10) umfasst,
- der Umrichter (13) mindestens eine Steuereinheit (14) aufweist,
**dadurch gekennzeichnet, dass**
- die erste Vorrichtung (11) mindestens zwei Mittel (15a, 15b) zum Erzeugen jeweils eines von der Anstellposition abhängigen elektrischen Signals (S₁ₐ, S_{1b}) aufweist,
- die Steuereinheit (14) und/oder die Auswerteeinheit (16) mindestens einen mit einem Signalausgang der Mittel (15a, 15b) verbundenen Signaleingang aufweist,
- die Steuereinheit (14) mit mindestens einer Auswerteeinheit (16) zum Überprüfen einer Redundanz der elektrischen Signale (S₁ₐ, S_{1b}) der mindestens zwei Mittel (15a, 15b) und zum Vergleichen der Signale (S₁ₐ, S_{1b}) der mindestens zwei Mittel (15a, 15b) oder eines Derivats der Signale (S₁ₐ, S_{1b}) mit mindestens einem hinterlegten Schwellwert (λ) verbindbar ist,
- und die Steuereinheit (14) und/oder die Auswerteeinheit (16) derart ausgebildet ist, so dass bei Überschreiten eines ersten Schwellwerts (λ₁) ein Blattverstellvorgang beendet wird.

2. Verstelleinrichtung (1) nach Anspruch 1, **dadurch gekennzeichnet, dass** die Mittel (15a, 15b) als Resolver, Potentiometergeber, Absolutgeber und/oder Inkrementalgeber ausgebildet sein können.

3. Verstelleinrichtung (1) nach Anspruch 2, **dadurch gekennzeichnet, dass** die Mittel (15a, 15b) durch einen Zahnkranz des Lagers (20) der Verstelleinrichtung (1), von einer langsamen Ausgangswelle (21) des Verstellmotors (10) oder von einer schnellen Welle des Verstellmotors angetrieben werden.

4. Verstelleinrichtung (1) nach Anspruch 1, **dadurch gekennzeichnet, dass** die Mittel (15a, 15b) im Umrichter (13) integriert sind, und das erzeugte Signal einen vom Umrichter (13) an den Verstellmotor (10) gespeisten Strom- und/oder Spannungsverlauf ist.

5. Verstelleinrichtung (1) nach einem oder mehreren der vorangestellten Ansprüche, **dadurch gekennzeichnet, dass** die Verstelleinrichtung (1) eine Notausschaltvorrichtung (12) zur Bestimmung einer Blattposition aufweist, und die Steuereinheit (14) derart ausgebildet ist, dass bei Erreichen der zweiten Blattposition die Verstellvorrichtung von einer Spannungsversorgung (1) trennbar ist.

6. Verstelleinrichtung (1) nach Anspruch 5, **dadurch gekennzeichnet, dass** die Notausschaltvorrichtung (12) Mittel (17) zum Erzeugen eines von der Anstellposition abhängigen Signals (S₂) und eine Auswerteeinheit (18) zum Vergleichen des Signals (S₂) oder eines Derivats des Signals (S₁) mit einem zweiten hinterlegten Schwellwert (λ₂) aufweist.

7. Verstelleinrichtung (1) nach Anspruch 6, **dadurch gekennzeichnet, dass** die Vorrichtung (11) zum Bestimmen einer ersten Anstellposition des Rotorblatts und die Notausschaltvorrichtung (12) zum Bestimmen einer zweiten Anstellposition des Rotorblatts jeweils dieselben Mittel (15) zum Erzeugen eines von der Anstellposition abhängigen Signals (S₁) und jeweils dieselbe Auswerteeinheit (16) verwenden, oder jeweils dieselben Mittel (15) aber jeweils separate Auswerteeinheiten (16, 18) verwenden, oder jeweils separate Mittel (15, 17) zum Erzeugen eines von der Anstellposition abhängiges Signal (S₁, S₂) und jeweils separate Auswerteeinheiten (16, 18) verwenden, und die Mittel (15, 17) nach einem der Ansprüche 2 bis 4 ausgebildet sind.

8. Verstelleinrichtung (1) nach Anspruch 6, **dadurch gekennzeichnet, dass** die Notausschaltvorrichtung (12) einen mechanischen Endlagenschalter (19) und ein damit zusammenwirkendes Betätigungselement aufweist und der Endlagenschalter (19) bei Erreichen der zweiten Blattposition von dem Betätigungselement mechanisch betätigt wird.

9. Verstelleinrichtung (1) nach einem der vorangehenden Ansprüchen, **dadurch gekennzeichnet, dass** der erste Schwellwert (λ₁) in einem Bereich zwischen 85° und 95° liegt, der zweite Schwellwert (λ₂) oder die Blattposition zum Schalten des Endlagenschalters (19) in einem anschließenden Bereich zwischen 95° und 100° liegt und der dritte Schwellwert (λ₃) zum Abgrenzen des Blattverstellbereichs in Betriebsrichtung zwischen 0° und -10° liegt.

10. Windturbine (2) mit einem auf einem Turm (3) drehbar gelagerten Maschinenhaus (4) und einem über eine Antriebswelle mit einem im Maschinenhaus (4) montierten Generator verbundenen Rotor (5), wobei der Rotor (5) eine Nabe (8) und mindestens ein Rotorblatt umfasst, das Rotorblatt (6) um eine in axialer Richtung des Rotorblatts (6) verlaufende Blattachse (7) drehbar über ein Lager (9) mit der Nabe (8) verbunden ist , und das Rotorblatt (6) von einer Verstelleinrichtung (1) angetrieben und in verschiedene Anstellpositionen angehalten werden kann, **dadurch gekennzeichnet, dass** die Verstelleinrichtung (1) nach einem oder mehreren der vorangestellten Ansprüche ausgebildet ist.

11. Verfahren zum Beenden eines Blattverstellvorgangs eines Rotorblatts (6) eines Rotors (5) einer Windturbine (2), wobei das Rotorblatt (6) über eine Verstelleinrichtung (1) nach einem oder mehreren der vorangehenden Ansprüchen verstellbar ist, **umfassend die Schritte**
- Erzeugen eines Signals zum Verstellen des Rotorblatts (6) in der Steuereinheit (14),
- Übertragen eines Signals zum Verstellen des Rotorblatts (6) von der Steuereinheit (14) an den Umrichter (13),
- Beaufschlagen des Verstellmotors (10) mit Strom und/oder Spannung durch den Umrichter (13),
- Erfassen einer Anstellposition des Rotorblatts (6) und Erzeugen eines von der Anstellposition abhängiges Signal (S₁ₐ, S_{1b}) durch die Mittel (15a, 15b),
- Übertragen des Signals von den Mitteln (15a, 15b) direkt oder indirekt an die Auswerteeinheit (16),
- Vergleichen der Signale (S₁ₐ, S_{1b}) mit in einem Speicher (26) hinterlegten Schwellwerten (λ), in der Auswerteeinheit (16),
- und bei Erreichen des Schwellwertes (λ₁), Erzeugen eines Signals (S_{St}) zum Beenden des Blattverstellvorgangs in der Auswerteeinheit (16) und Verschicken des Signals (S_{St}) an der Steuereinheit (14).

12. Verfahren nach Anspruch 11, **wobei** das Signal (S₁ₐ) und/oder das Signal (S_{1b}) vor dem Vergleichen von der Auswerteeinheit (16) bearbeitet werden.

13. Verfahren nach Anspruch 11 oder 12, wobei das Rotorblatt (6) über eine Verstelleinrichtung (1) nach einem der Ansprüche 6 bis 9 verstellbar ist, **umfassend die Schritte,**
- Erfassen einer Anstellposition des Rotorblatts (6) und Erzeugen eines von der Anstellposition abhängiges Signal (S₂) durch die Mittel (17),
- Übertragen des Signals von den Mitteln (17) direkt oder indirekt an die Auswerteeinheit (18),
- Vergleichen des Signals (S₂) mit in einem Speicher (26) hinterlegten Schwellwerten (λ), in der Auswerteeinheit (18),
- und bei einem Überschreiten des ersten Schwellwertes (λ₁) ohne Beendigung des Verstellvorgangs und bei Erreichen des Schwellwertes (λ₂), Erzeugen eines Signals (S_{St}) zum Trennen der Verstelleinrichtung von der Spannungsversorgung, in der Auswerteeinheit (16) und Verschicken des Signals (S_{St}) an der Steuereinheit (14).

14. Verfahren nach Anspruch 13, **wobei** das Signal (S₂) vor dem Vergleichen mit einem hinterlegten Schwellwert (A) von der Auswerteeinheit (18) bearbeitet wird.

## Claims

1. Adjusting device (1) for a rotor blade (6) of a rotor (5) of a wind turbine (2),
- wherein the rotor (5) comprises a hub (8) and at least one rotor blade (6),
- wherein the rotor blade (6) can be installed on a bearing (9) that can be installed between the rotor blade (6) and the hub (8),
- and wherein the rotor blade (6) can be arranged on the hub in different pitch positions for rotation about a blade axis (7) which extends in an axial direction of the rotor blade (6),
- wherein the adjusting device (1) comprises an adjusting motor (10) for driving and/or locking the rotor blade (6), a first device (11) for determining a blade position, and a converter (13) for controlling the adjusting motor (10)
- wherein the converter (13) comprises at least one control unit (14),
**characterized in that**
- the first device (11) comprises at least two means (15a, 15b) for generating a respective electrical signal (S₁ₐ, S_{1b}) that depends on the pitch position,
- the control unit (14) and/or the evaluation unit (16) have at least one signal input associated with a signal output of the means (15a, 15b),
- the control unit (14) can be connected to at least one evaluation unit (16) for checking a redundancy of the electrical signals (S₁ₐ, S_{1b}) of the at least two means (15a, 15b) and for comparing the signals (S₁ₐ, S_{1b}) of the at least two means (15a, 15b) or a derivative of the signals (S₁ₐ, S_{1b}) with at least one stored threshold value (λ),
- and the control unit (14) and/or the evaluation unit (16) are configured so as to terminate a blade adjustment process when a first threshold value (λ₁) is exceeded.

2. Adjusting device (1) according to claim 1, **characterized in that** the means (15a, 15b) can be constructed as resolvers, potentiometric sensors, absolute sensors and/or incremental sensors.

3. Adjusting device (1) according to claim 2, **characterized in that** the means (15a, 15b) are driven by a sprocket of the bearing (20) of the adjusting device (1), by a slow output shaft (21) of the adjusting motors (10) or by a fast shaft of the adjusting motor.

4. Adjusting device (1) according to claim1, **characterized in that** the means (15a, 15b) are integrated in the converter (13) and the generated signal is a current and/or voltage curve supplied from the converter (13) to the adjusting motor (10).

5. Adjusting device (1) according to one or more of the preceding claims, **characterized in that** the adjusting device (1) comprises an emergency shutdown device (12) for determining a blade position and the control unit (14) is configured so that the adjusting device (1) can be disconnected from a voltage supply when the second blade position is reached.

6. Adjusting device (1) according to claim 5, **characterized in that** the emergency shutdown device (12) comprises means (17) for generating a signal (S₂) depending on the pitch position and an evaluation unit (18) for comparing the signal (S₂) or a derivative of the signal (S₁) with a second stored threshold (λ₂).

7. Adjusting device (1) according to claim 6, **characterized in that** the device (11) for determining a first pitch position of the rotor blade and the emergency shutdown device (12) for determining a second pitch position of the rotor blade each use the same means (15) for generating a signal (S₁) depending on the pitch position and each use the same evaluation unit (16), or each use the same means (15) but separate evaluation units (16, 18), or each use separate means (15, 17) for generating a signal (S₁ₐ, S_{1b}) depending on the pitch position and separate evaluation units (16, 18), and the means (15, 17) are configured according to one of the claims 2 to 4.

8. Adjusting device (1) according to claim 6, **characterized in that** the emergency shutdown device (12) comprises a mechanical limit switch (19) and an actuating element cooperating therewith, and the limit switch (19) is actuated mechanically when the actuating element reaches the second blade position.

9. Adjusting device (1) according to one of the preceding claims, **characterized in that** the first threshold value (λ₁) is located in a range between 85° and 95°, the second threshold value (λ₂) or the blade position for switching the limit switch (19) is located in an adjacent range between 95° and 100°, and the third threshold value (λ₃) for limiting the blade adjustment range in the operating directions is located between 0° and -10°.

10. Wind turbine (2) with a nacelle (4) supported for rotation on a tower (3) and a rotor (5) connected via a drive shaft to a generator installed in the nacelle (4); wherein the rotor (5) comprises a hub (8) and at least one rotor blade (6) connected to the hub by way of a bearing (9) for rotation about a blade (6) is driven by an adjusting device (1) and can be stopped in several pitch positions, **characterized in that** the adjusting device (1) is constructed according to one or several of the preceding claims.

11. Method for terminating a blade adjustment process of a rotor blade (6) of a rotor (5) of a wind turbine (2), wherein the rotor blade (6) can be adjusted with an adjusting device (1) according to one or several of the preceding claims, **comprising the steps:**
- Generating a signal for adjusting the rotor blade (6) in the control unit (14),
- Transmitting a signal for adjusting the rotor blade (6) from the control unit (14) to the converter (13),
- Applying a current and/or voltage to the adjusting motor (10) with the converter (13),
- Determining a pitch position of the rotor blade (6) and generating with the means (15a, 15b) and a signal (S₁ₐ, S_{1b}) depending on the pitch position,
- Transmitting the signal from the means (15a, 15b) directly or indirectly to the evaluation unit (16),
- Comparing the signals (S₁ₐ, S_{1b}) in the evaluation unit (16) with threshold values (λ) stored in a memory (26),
- and when the threshold value (λ₁) is reached, generating in the evaluation unit (16) a signal (S_{St}) to the control unit (14).

12. Method according to claim 11, **wherein** the signal (S₁ₐ) and/or the signal (S_{1b}) are processed by the evaluation unit (16) before the comparison.

13. Method according to claim 11 or 12, **wherein** the rotor blade (6) can be adjusted by an adjusting device (1) according to one of the claims 6 to 9, **comprising the steps:**
- Determining a pitch position of the rotor blade (6) and generating with the means (17) a signal (S₂) depending on the pitch position,
- Transmitting a signal from the means (17) directly or indirectly to the evaluation unit (18),
- Comparing the signal (S₂) in the evaluation unit (18) with threshold values (λ) stored in a memory (26),
- and when threshold value (λ₁) is exceeded without the adjustment process being terminated and when the threshold value (λ₂) is reached, generating in the evaluation unit (16) a signal (S_{St}) for disconnecting the adjusting device from the voltage supply and transmitting the signal (S_{St}) to the control unit (14).

14. Method according to claim 13, **wherein** the signal (S₂) is processed by the evaluation unit (18) before the comparison with a stored threshold value (λ).

## Revendications

1. Dispositif de réglage (1) pour une pale de rotor (6) d'un rotor (5) d'une éolienne (2),
- Dans lequel le rotor (5) comprend un moyeu (8) et au moins une pale de rotor (6),
- Dans lequel la pale de rotor (6) peut être installé sur un roulement (9) qui peut être installé entre la pale du rotor (6) et le moyeu (8),
- Et dans lequel la pale de rotor (6) peut être positionnée sur le moyeu dans des positions de d'inclinaison différentes en rotation autour d'un axe de pale (7) qui s'étend dans une direction axiale de la pale du rotor (6),
- Où le dispositif de réglage (1) comprend un moteur de réglage (10) pour l'entraînement et / ou un dispositif de verrouillage de la pale du rotor (6), un premier dispositif (11) pour déterminer une position de la pale, et d'un convertisseur (13) pour commander moteur de réglage (10)
- Où le convertisseur (13) comprend au moins une unité de commande (14),
**Caractérisé en ce que**
- Le premier dispositif (11) comprend au moins deux moyens (15a, 15b) de générer respectivement un signal électrique (S1a, S1b), qui dépend de la position de pas,
- L'unité de control (14) et / ou l'unité d'évaluation (16) a au moins un signal d'entrée associé à un signal de sortie des moyens (15a 15b,),
- L'unité de control (14) peut être connectée à au moins une unité d'évaluation (16) pour contrôler une redondance des signaux électriques (S1a, S1b), au minimum, des deux moyens (15a, 15b) et pour comparer les signaux (S1a, S1b), au minimum, des deux moyens (15a, 15b) ou bien d'un dérivé des signaux (S1a, S1b) avec au moins une valeur de seuil stockée ( 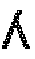 ),
- Et l'unité de control (14) et / ou l'unité d'évaluation (16) sont configurés de manière à terminer un processus d'ajustement de la pale quand une première valeur de seuil ( 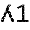 ) est dépassée.

2. Dispositif de réglage (1) selon la revendication 1, **caractérisé en ce que** les moyens (15a, 15b) peuvent être construits comme des résolveurs, des capteurs potentiométriques, des capteurs à mesures absolues et / ou des capteurs incrémentaux.

3. Dispositif de réglage (1) selon la revendication 2, **caractérisé en ce que** les moyens (15a, 15b) soient entraînés par la roue dentée du roulement (20) du dispositif de réglage (1), par un arbre d'entrainement à sortie lente (21) des moteurs de réglage (10) ou par un arbre d'entrainement rapide du moteur de réglage.

4. Dispositif de réglage (1) selon la claim1, **caractérisé en ce que** les moyens (15a, 15b) soient intégrés dans le convertisseur (13) et que le signal produit soit une courbe de courant et / ou de tension fournie par le convertisseur (13) au moteur de réglage (10).

5. Dispositif de réglage (1) selon l'une ou plusieurs des revendications précédentes, **caractérisé en ce que** le dispositif de réglage (1) comprenne un dispositif d'arrêt d'urgence (12) pour déterminer une position de la pale et que l'unité de control (14) soit configurée de telle sorte que le dispositif de réglage (1) puisse être déconnecté de l'alimentation en tension lorsque la seconde position de la pale est atteinte.

6. Dispositif de réglage (1) selon la revendication 5, **caractérisé en ce que** le dispositif d'arrêt d'urgence (12) comprenne des moyens (17) pour générer un signal (S2) en fonction de la position de pas et une unité d'évaluation (18) pour comparer le signal (S2) ou bien un dérivé du signal (S1) avec une seconde valeur de seuil stockée ( 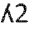 ).

7. Dispositif de réglage (1) selon la revendication 6, **caractérisé en ce que** le dispositif (11) déterminant une première position de pas de la pale du rotor et le dispositif d'arrêt d'urgence (12) déterminant une seconde position de pas de la pale du rotor, utilisent chacun les mêmes moyens (15) pour générer un signal (S1) en fonction de la position de pas et utilisent chacun la même unité d'évaluation (16), ou bien qu'ils utilisent chacun les mêmes moyens (15) mais des unités d'évaluation séparées (16, 18), ou bien qu'ils utilisent chacun des moyens séparés (15, 17) pour générer un signal (S1a, S1b) en fonction de la position de pas et des unités d'évaluation séparées (16, 18), et que les moyens (15, 17) soient configurés selon l'une des revendications 2 à 4.

8. Dispositif de réglage (1) selon la revendication 6, **caractérisé en ce que** le dispositif d'arrêt d'urgence (12) comprenne un interrupteur mécanique de fin de course (19) et un actuateur coopérant avec celui-ci, et l'interrupteur mécanique de fin de course (19) est actionné mécaniquement lorsqu'un actuateur atteint la deuxième position de la pale.

9. Dispositif de réglage (1) selon l'une des revendications précédentes, **caractérisé en ce que** la première valeur de seuil ( 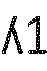 ) soit située dans une plage comprise entre 85 ° et 95 °, la seconde valeur de seuil ( 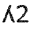 ) ou bien la position de la pale pour commuter l'interrupteur mécanique de fin de course (19) soit située dans une plage adjacente entre 95° et 100°, et la troisième valeur de seuil ( 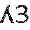 ) pour limiter la plage de réglage de la pale dans les directions d'opération soit situé entre 0 ° et -10 °.

10. Une éolienne (2) avec une nacelle (4) supportée pour tourner sur une tour (3) et un rotor (5) relié par l'intermédiaire d'un arbre d'entraînement à un générateur installé dans la nacelle (4); dans lequel le rotor (5) comprend un moyeu (8) et au moins une pale de rotor (6) reliée au moyeu par l'intermédiaire d'un roulement (9), pouvant faire pivoter la pale (6), qui est entraîné par un dispositif de réglage (1) et qui peut être arrêté dans plusieurs positions de pas, **caractérisé en ce que** le dispositif de réglage (1) soit réalisé selon l'une ou plusieurs des revendications précédentes.

11. Méthode pour mettre fin au processus de réglage de la pale (6) de la pale d'un rotor (5) d'une éolienne (2), dans lequel la pale de rotor (6) peut être réglée avec un dispositif de réglage (1) selon l'une ou plusieurs des revendications précédentes, comprenant les étapes suivantes:
- La génération d' un signal de réglage de la pale de rotor (6) dans l'unité de commande (14),
- La transmission un signal de réglage de la pale de rotor (6) de l'unité de commande (14) au convertisseur (13),
- L'application d'un courant et / ou d'une tension au moteur de réglage (10) avec le convertisseur (13),
- La détermination d'une position de pas de la pale de rotor (6) et la génération avec le moyen (15a, 15b) et un signal (S1a, S1b) en fonction de la position de pas,
- La transmission du signal à partir des moyens (15a, 15b), directe ou indirecte, à l'unité d'évaluation (16),
- La comparaison des signaux (S1a, S1b) de l'unité d'évaluation (16) avec des valeurs de seuil ( 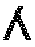 ) stockées dans une mémoire (26),
- Et lorsque la valeur de seuil ( 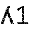 ) est atteinte, la génération dans l'unité d'évaluation (16) d'un signal (S_{St}) à l'unité de commande (14).

12. Méthode selon la revendication 11, dans laquelle le signal (S1a) et / ou le signal (S1b) sont traités par l'unité d'évaluation (16) avant la comparaison.

13. Méthode selon la revendication 11 ou 12, dans lequel la pale de rotor (6) peut être réglée par un dispositif de réglage (1) selon l'une quelconque des revendications 6 à 9, comprenant les étapes suivantes:
- La détermination d'une position de pas de la pale de rotor (6) et la génération avec les moyens (17) d'un signal (S2) en fonction de la position de pas,
- La transmission d'un signal provenant du moyen (17), directe ou indirecte, à l'unité d'évaluation (18),
- La comparaison du signal (S2) dans l'unité d'évaluation (18) avec des valeurs de seuil ( 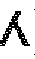 ) stockée dans une mémoire (26),
- Et lorsque la valeur de seuil ( 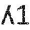 ) est dépassée sans que le processus de réglage ne soit terminé et lorsque la valeur de seuil ( 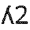 ) est atteinte, la génération, dans l'unité d'évaluation (16), d'un signal (S_{St}) pour déconnecter le dispositif de réglage de la tension d'alimentation et la transmission d'un signal (S_{St}) à l'unité de commande (14).

14. Procédé selon la revendication 13, dans lequel le signal (S2) est généré par l'unité d'évaluation (18) avant la comparaison avec une valeur de seuil stockée ( 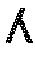 ).
